Europäisches Patentamt

European Patent Office

Office européen des brevets

(19)

(11) Publication number: 0 177 335
A2

# (12) EUROPEAN PATENT APPLICATION

(21) Application number: 85307020.9

(51) Int. Cl.⁴: A 63 C 19/04

(22) Date of filing: 01.10.85

(30) Priority: 03.10.84 GB 8424933

(43) Date of publication of application:
09.04.86 Bulletin 86/15

(84) Designated Contracting States:
AT BE CH DE FR IT LI LU NL SE

(71) Applicant: En-tout-cas PLC

Syston Leicester, LE7 8NP(GB)

(72) Inventor: Hawkins, Paul
365 Uppingham Road
Leicester(GB)

(72) Inventor: Spurr, Alexander
The Nook Main Street
Rotherby Melton Mowbray Leicestershire(GB)

(74) Representative: Jones, Andree Zena et al,
E. N. Lewis & Taylor 144 New Walk
Leicester LE1 7JA(GB)

(54) Artificial sports surface.

(57) The invention relates to a method of applying an elongate strip of fill-in material to a carpet adapted to simulate a grass playing surface and wherein the pile of the carpet comprises strips, filaments or threads of synthetic material, comprising the steps of reducing the height of the pile in an elongate path in the carpet surface to form a channel in said pile and inserting in said channel a strip of the fill-in material substantially to occupy the channel and restore the original overall height of the pile.

Conveniently, the fill-in material is a strip of pile fabric of a colour which contrasts with the carpet and forms a demarcation line. Alternatively the channel may be formed along a join in the carpet and the strip is of the same colour to mask the join.

FIG.2

EP 0 177 335 A2

Artificial Sports Surface

The invention is concerned with improvements in or relating to artificial sports surfaces, particularly surfaces including a pile formed from synthetic plastics material.

Many artificial sports surfaces are provided by means of carpets or ground covering adapted to simulate the appearance of grass and comprising a fabric having a pile formed from synthetic plastics material in strip or filament form, each strip or filament being secured in a backing sheet of suitable construction. The carpet is laid on the ground and fitted to the desired area by joining adjacent edges of carpet pieces and then applying demarcation lines thereon according to the type of sport or game to be played.

The invention relates to a method of applying an elongate strip of fill-in material to a carpet adapted to simulate a grass playing surface and wherein the pile of the carpet comprises strips, filaments or threads of synthetic material, comprising the steps of reducing the height of the pile in an elongate path in the carpet surface to form a channel in said pile and inserting in said channel a strip of the fill-in material substantially to occupy the channel and restore the original overall height of the pile.

Advantageously, in the case of thermoplastic material the height of the pile is reduced by applying heat to the pile in said path at a temperature above that at which the pile material softens. Alternatively, the pile may be cut to form the channel.

In an example of the invention to be described below, a demarcation line is introduced into a sports surface comprising a pile carpet by melting the pile in the desired elongate paths and inserting into the channels so formed strips of pile carpet of a contrasting colour. The strips may be secured by adhesive or, if applied while the melted pile is still in a heated condition, by adherence to the molten plastic in a welding step. Conveniently the height of the pile of the strip, which may be white, is less than that of the carpet, which is conventionally green, so that the pile of the strip does not protrude above that of the carpet. In other cases, the strip may comprise compressible plastics material for example expanded material.

In another example to be described below, a join between two adjacent edge portions of carpet may be effected by abutting said edge portions and if required securing the same in position by, for example, adhesive tape. A channel is then formed, preferably by melting the pile along the join. A strip of matching pile fabric is then bonded in place into the channel and where the relative heights of the pile are correctly arranged, becomes undetectable in the pile of the carpet.

-3-    0177335

There will now be described two examples of the method according to the invention.  It will be understood that the description, which is to read with reference to the drawings, is given by way of example only and not by way of limitation.

In the drawings:

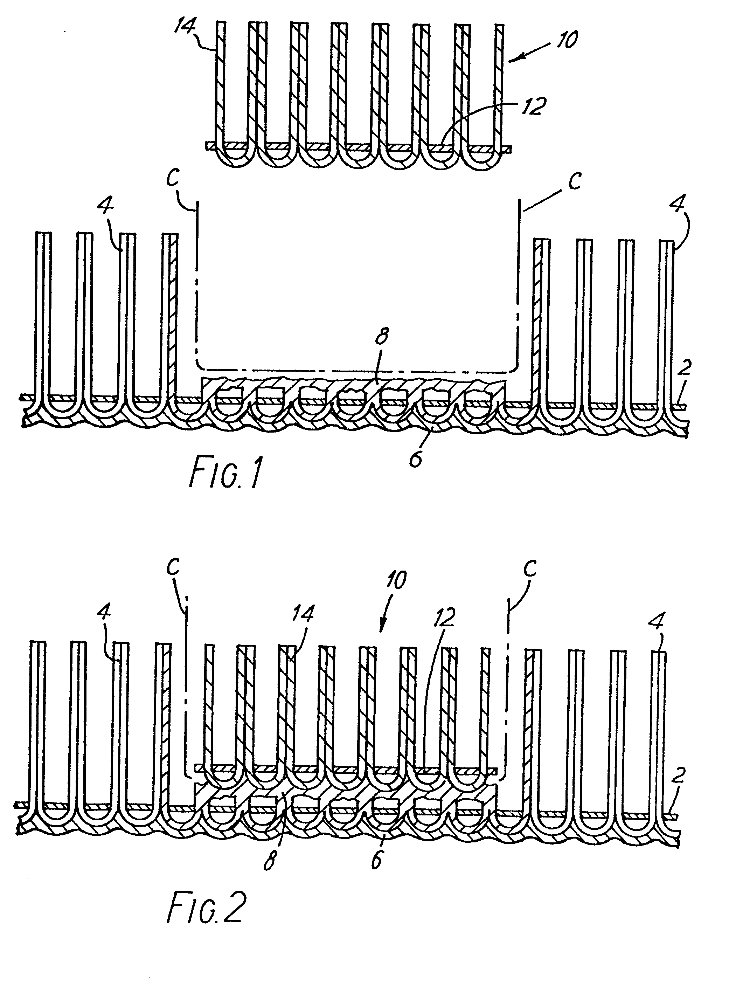

Figure 1 shows an example which diagrammatically illustrates one stage in the insertion of demarcation lines according to the method of the invention;

Figure 2 shows a subsequent stage in the method;

Figure 3 shows a second example, which illustrates the forming of a seam between adjacent portions of sports surface carpet; and

Figure 4 shows a heating device for use in a stage of the method.

Where a synthetic sports surface is to be laid, it is necessary to lay rolls of carpet, which in the present example comprise a primary backing layer 2 through which are looped strips or threads 4 of green synthetic plastics material to form a pile, having a visual appearance approximately to that of grass.  The threads 4 of the pile are held in place by a conventional bonding layer 6.

Where it is necessary to mark lines on the playing surface, the conventional methods used on grass are impractical. Substitute methods have been tried which involve inserting a white fibre line into the carpet during manufacture or more commonly, cutting the carpet and inserting a narrow strip of white carpet in to the gap between edges of the

main,green, carpet. Backing tape and adhesive are then used to hold the white carpet in position, but such an arrangement is liable to early seam failure. Although the manufacture of carpets with integral demarcation lines avoids this problem, the difficulties encountered while laying the carpet are very great indeed, since accurate alignment of the demarcation lines is essential but requires skill and time to achieve.

According to the present example carpet is laid over the entire area to be covered, the carpet comprising as above, a pile comprising green threads 4 secured in a backing layer 2 by a bonding layer 6. The pile is then subjected to heat in paths corresponding to the desired demarcation lines, for example for a tennis court the heat is applied by a suitable device 7 incorporating a heat duct 9 so that a channel, C, is formed in the pile, the melted pile in the path of the heating device 7 accumulating in the bottom of the channel C at 8. In the example, the heating device is a so-called heat gun.

The next step comprising of placing in the channel a strip of carpet indicated at 10, comprising a backing layer 12 into which are looped strips or threads 14 of white synthetic plastics material, the full length of the threads 14, i.e. the height of the pile, being selected so that the tips of the threads 14 are level with the tips of the threads 4 when the strip of carpet 10 is in position. If the carpet strip 10 is placed in the channel before the

- 5 -

0177335

plastics material at 8 has re-hardened then the molten plastics material will key with the reverse side of the carpet strip to secure it.  However, this may alternatively or in addition be achieved by the use of adhesive.

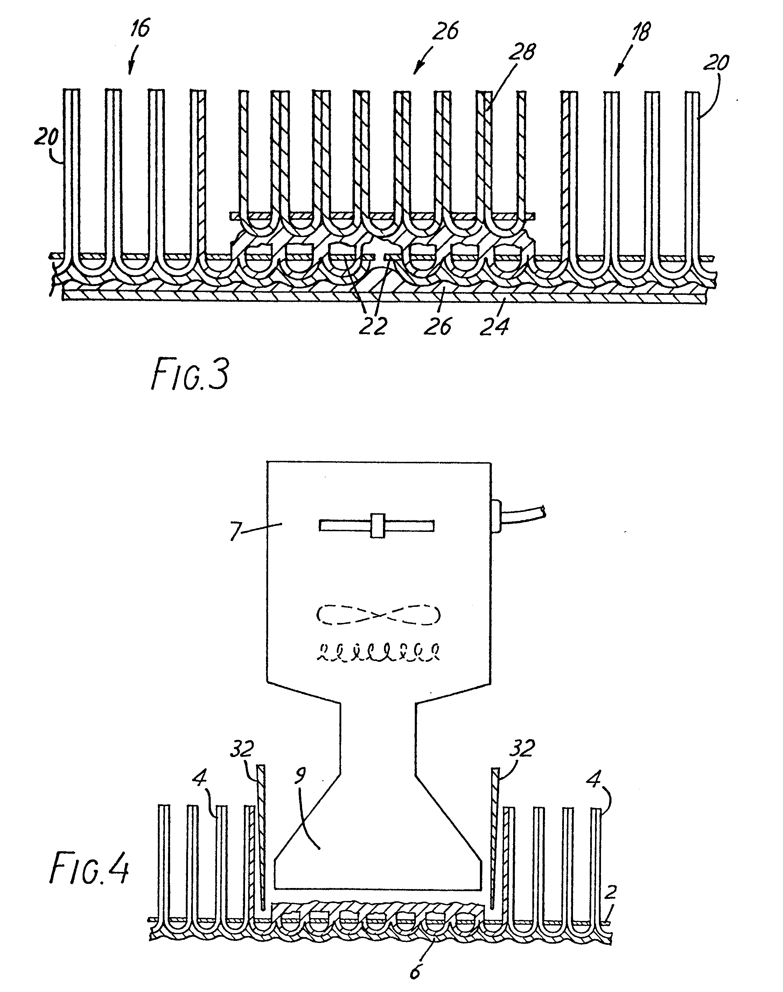

Figure 3 of the drawings show the strengthening of a seam using the method of the invention.  In this example, two portions of carpet, 16 and 18, each comprising green threads 20 of plastics material are to be joined.  Margins 22 of the portion 16 and 18 are to be abutted and are secured initially in place by conventional tape 24 coated with adhesive 26.  A channel C' is then formed as in the previous example and a strip of carpet 28 inserted therein.  However, in this example the pile 30 of the carpet strip is green in colour and exactly matches that of the threads 20.  Thus the seam is at once strengthened and completely masked.

A suitable heat applying device may be a conventional heat gun having a heat directing duct of a selected width according to the desired width of channel.  If required a pair of rails 32 (Figure 4) may act as a guard or template to ensure a clean edge to the channel and the distance between the rails 32 may be adjustable.

Various modifications may be made within the scope of the invention  as defined by the following claims.

CLAIMS:

1.   A method of applying an elongate strip of fill-in material to a carpet adapted to simulate a grass playing surface and wherein the pile of the carpet comprises strips, filaments or threads of synthetic material, comprising the steps of reducing the height of the pile in an elongate path in the carpet surface to form a channel in said pile and inserting in said channel a strip of the fill-in material substantially to occupy the channel and  restore the original overall height  of the pile.

2.   A method according to claim 1 wherein the fill-in material comprises a strip of pile fabric.

3.   A method according to claim 1, wherein the fill-in material comprises a strip of compressible plastics material.

4.   A method according to any one of the preceding claims wherein the strip of fill-in material is secured to the channel base by a bonding technique.

5.   A method according to claim 4 wherein the height of the pile is reduced by applying heat in the path corresponding to the desired channel, causing the

0177335

synthetic material of the pile to melt.

6.    A method according to claim 5 wherein the fill-in material is placed in position before the molten material of the pile has cooled and re-hardened, so that said molten pile material will key with the underside of the fill-in material to secure it.

7.    A method according to either one of claims 4 and 5 wherein the fill-in material is secured in the channel by adhesive.

8.    A method according to any one of the preceding claims wherein the strip of fill-in material is of a colour contrasting with that of the carpet material.

9.    A method according to claim 2, wherein the path of the channel formed in the carpet follows a join therein where two edge portions of the carpet are abutted.

10.    A method according to claim 9, wherein the strip of fill-in material comprises a strip of pile fabric of identical or substantially identical colour so as to mask said join.

11.   A method as claimed in either one of Claims 9 and 10, wherein the abutted edge portions are joined on their lower surface by tape prior to the formation of the channel.

12.   A method according to claim 5, wherein the channel is formed by the use of a heat applying device having a heat outlet of a width corresponding to the width of channel required.

13.   A method according to claim 12, wherein the device is a so-called heat gun movable in a path defined by a pair of parallel rails acting as a template or guard means.

14.   A method according to claim 13, wherein the distance between the rails is adjustable.

0177335

FIG.1

FIG.2

FIG.3

FIG.4